# EUROPEAN PATENT SPECIFICATION

(11) **EP 3 569 842 B1**
(45) Date of publication and mention of the grant of the patent: **10.05.2023**
(21) Application number: 19174719.5
(22) Date of filing: 15.05.2019
(51) Int. Cl.: F02C 6/08, F02C 7/18

(54) **ELECTRICALLY DRIVEN COOLED COOLING AIR SYSTEM**
ELEKTRISCH ANGETRIEBENES GEKÜHLTES KÜHLLUFTSYSTEM
SYSTÈME D'AIR DE REFROIDISSEMENT REFROIDI À COMMANDE ÉLECTRIQUE

(30) Priority: 16.05.2018 US 201815980814
(43) Date of publication of application: 20.11.2019
(73) Proprietor: Raytheon Technologies Corporation, Farmington, CT 06032 (US)
(72) Inventor: ROBERGE, Gary D., Tolland, CT Connecticut 06084 (US)
(74) Representative: Dehns

(56) References cited:
- EP-A1- 3 127 812
- EP-A1- 3 318 743
- US-A1- 2015 065 025
- US-A1- 2016 312 711

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

Temperatures encountered in the turbine section during operation are such that cooling air is supplied to maintain components within desired operating ranges. Cooling air is tapped from the compressor section and directed to the turbine sections. Air tapped from the compressor section may be routed to an auxiliary compressor to increase pressures to be compatible with pressures within the turbine section. Any air tapped from the compressor section or energy utilized to drive the auxiliary compressor can reduce overall engine efficiency.

Although advances in turbine engine technology have improved engine efficiencies, turbine engine manufacturers continue to seek further improvements to engine performance including improvements to thermal, transfer and propulsive efficiencies.

EP 3 318 743 A1 discloses a prior art intercooled cooling system for a gas turbine engine.

US 2015/065025 A1 discloses a prior art environmental control system including a compressing device.

US 2016/312711 A1 discloses prior art intercooled cooling air with plural heat exchangers.

### SUMMARY

According to one aspect of the present invention there is provided a gas turbine engine as claimed in claim 1.

In an embodiment of the foregoing gas turbine engine, the compressor section includes a low pressure compressor axially forward of a high pressure compressor and the air tap is disposed within the high pressure compressor.

In a further embodiment of any of the foregoing gas turbine engines, the turbine section includes a first turbine disposed forward of a second turbine and the outlet passages communicates cooling air to the first turbine.

In a further embodiment of any of the foregoing gas turbine engines, the first turbine is disposed aft of a combustor and forward of the second turbine.

In a further embodiment of any of the foregoing gas turbine engines, a power source powers the electric motor. The power source comprises one generator and a battery.

In a further embodiment of any of the foregoing gas turbine engines, a generator supplies power to the electric motor. The generator is driven by a shaft coupling the high pressure compressor to the first turbine.

In a further embodiment of any of the foregoing gas turbine engines, a generator supplies power to the electric motor. The generator is driven by a shaft coupling the low pressure compressor to the second turbine.

In a further embodiment of any of the foregoing gas turbine engines, a controller commands operation of the electric motor independent of a speed of the compressor section.

In a further embodiment of any of the foregoing gas turbine engines, at least one of the first heat exchanger and the second heat exchanger is exposed to bypass flow through a bypass flow passage.

Another gas turbine engine according to another non-claimed aspect of the present disclosure includes, among other possible things, an inter-stage cooled cooling air system for a gas turbine engine that includes an auxiliary compressor including an inlet configured to receive air and an outlet configured to discharge air, an air tap configured to draw air from a point upstream of the aft most compressor section exit, an electric motor configured to drive the auxiliary compressor, a first heat exchanger within an inlet passage between the air tap and the inlet to the auxiliary compressor. A second heat exchanger is disposed within an outlet passage between the outlet of the auxiliary compressor and the turbine section.

In an embodiment of the foregoing gas turbine engine, a power source is configured to drive the electric motor. The power source is comprised of one generator and a battery.

In a further embodiment of any of the foregoing gas turbine engines, a controller configured to command operation of the electric motor independent of a speed of gas turbine engine.

In a further embodiment of any of the foregoing gas turbine engines, the controller is configured to command the electric motor to rotate the compressor at a speed based on a predefined flight profile.

In a further embodiment of any of the foregoing gas turbine engines, at least one of the first heat exchanger and the second heat exchanger is exposed to bypass flow through a bypass flow passage.

Another gas turbine engine according to another non-claimcd aspect of the present disclosure includes, among other possible things, a gas turbine engine, a compressor section including an aft most exit, a means for drawing air from a point upstream of the aft most exit, an auxiliary compressor configured to receive air from the means for drawing air and discharge air to a turbine section, an electric motor configured to drive the auxiliary compressor, and a first heat exchanger within an inlet passage between the air tap and an inlet to the auxiliary compressor. A second heat exchanger is disposed within an outlet passage between an outlet of the auxiliary compressor and the turbine section.

In an embodiment of the foregoing gas turbine engine, the compressor section includes a low pressure compressor axially forward of a high pressure compressor. The means for drawing air is disposed within the high pressure compressor. The turbine section includes a first turbine disposed forward of a second turbine and the discharge air from the auxiliary compressor is communicated to the first turbine.

According to another aspect of the present invention there is provided a method of cooling a turbine section of a gas turbine engine as claimed in claim 11.

In an embodiment of the foregoing method, operation of the electric motor commands drive rotation of the auxiliary compressor separately from a rotational speed of a compressor section of the gas turbine engine.

In a further embodiment of any of the foregoing methods, bypass airflow is routed to at least one of the first heat exchanger and the second heat exchanger for cooling air drawn from the air tap.

Although the different examples have the specific components shown in the illustrations, embodiments of this invention are not limited to those particular combinations.

These and other features disclosed herein can be best understood from the following specification and drawings, the following of which is a brief description.

### BRIEF DESCRIPTION OF THE DRAWINGS

Figure 1 is a schematic view of an example gas turbine engine including an inter-stage cooled cooling air system not covered by the claims of the present invention.
Figure 2 is a schematic view of an example gas turbine engine including an inter-stage cooled cooling air system according to the present invention.

### DETAILED DESCRIPTION

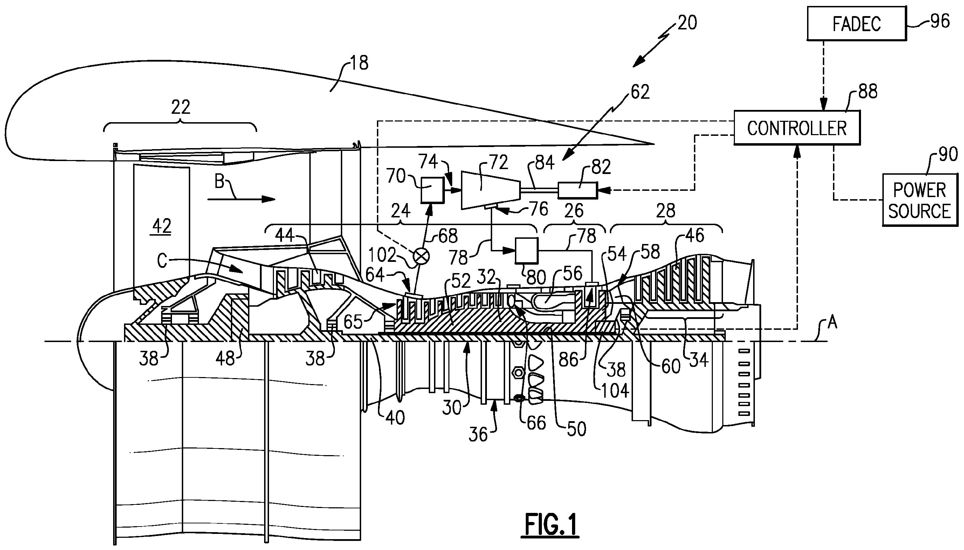

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a second (or low) pressure turbine 46. The inner shaft 40 is connected to the fan section 22 through a speed change mechanism, which in the exemplary gas turbine engine 20 is illustrated as a geared architecture 48 to drive the fan section 22 at a lower speed than the low speed spool 30. The high speed spool 32 includes an outer shaft 50 that interconnects a second (or high) pressure compressor 52 and a first (or high) pressure turbine 54. A combustor 56 is arranged in the exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56 to generate a high-energy exhaust gas flow that is then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5 (where °R = K x 9/5). The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about twenty-six fan blades 42. In another non-limiting embodiment, the fan section 22 includes less than about twenty fan blades 42. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

The turbine section 28 of the example gas turbine engine 20 operates at temperatures that may exceed material limits and therefore is provided with cooling air to maintain components within defined operational limits. Moreover the core flow C exiting the combustor 56 is of a particularly high temperature and therefore cooling air flow is provided components within the high pressure turbine 54 to maintain material temperatures within defined temperature ranges. The example gas turbine engine 20 includes an inter-stage cooled cooling air (ICCA) system 62 that draws air from the compressor section 24, conditions the air and routes the conditioned air to the turbine section 28.

Air within the compressor section 52 is compressed to a highest pressure known as a P3 pressure and highest temperature known as a T3 temperature. The P3 pressure and T3 temperature is present at an exit 66 of the high pressure compressor 52. Tapping any air from the compressor section 24 can reduce overall engine efficiency. Moreover, the further downstream air is tapped within the compressor section 24, the more energy has been utilized to pressurize that air. The closer to the exit 66, the higher the pressure and corresponding temperature of the core airflow. Accordingly, core airflow is tapped from a location upstream of the exit 66. Pressures within the turbine section 28 are such that air drawn from the compressor section 24 may not be of a sufficient pressure for use in the turbine section 28. Cooling of components in turbine section 28 is dependent on the temperature, pressure and flow rate of air delivered from compressor section 24 as it is delivered to each component requiring cooling.

In the disclosed example ICCA system 62 an air tap 64 is disposed forward of the aft-most exit 66 of the high pressure compressor 52. In the disclosed system 62, the air tap 64 is within the high pressure compressor 52. Moreover, the air tap 64 is near an inlet 65 within the high pressure compressor 52. Additionally, although the example air tap 64 is located within the high pressure compressor 52, the air tap may be located within the low pressure compressor 44.

The ICCA system 62 includes an auxiliary compressor 72 that is driven by an electric motor 82 through a drive shaft 84. The electric motor 82 enables the auxiliary compressor 72 to operate independent of the speed of both the high spool 32 and the low spool 30. The auxiliary compressor includes an inlet 74 that receives core air flow from compressor 24 and a discharge (or 'outlet') 76 that outputs pressurized air flow to an outlet passage 78.

The air tap 64 supplies core air flow from compressor 24 to an inlet passage 68 leading to the inlet 74 of the auxiliary compressor 72. The inlet passage 68 includes a first heat exchanger 70 for cooling the core air flow prior to entering the auxiliary compressor 72. A control valve 102 is provided in the inlet passage 68 to adjust a flow rate of air extracted from compressor 24 section. Air flow provided by the air tap 64 is compressed to a higher pressure within the auxiliary compressor 72 and then discharged through the discharge 76.

From the discharge 76, the now pressurized air is directed through a second heat exchanger 80 and then to an inlet 86 to cool the turbine section 28. The example second heat exchanger 80 is provided within the outlet passage 78. In this example, the outlet passage 78 communicates cooled and pressurized air from the auxiliary compressor 72 to the high pressure turbine 54. However, it should be understood that cooled cooling air could be provided to any portion within the turbine section 28 including the low pressure turbine 46 or other components within the engine 20 that require cooled cooling air.

It should be understood that although a single heat exchanger is shown before and after the auxiliary compressor 72, additional heat exchangers may be provided before and/or after the auxiliary compressor 72 and are within the contemplation of this disclosure. Moreover, the number and configuration of the heat exchangers may be different than the disclosed example in order to provide the cooling air at a temperature to the turbine section 28 that is less than T3. Additionally, in another disclosed example, the size and/or number of heat exchangers before the auxiliary compressor 72 could be combined to reduce or eliminate the need for a heat exchange within the outlet passage 78.

The electric motor 82 is controlled by a motor controller 88 that may utilize information from an engine or aircraft controller such as a FADEC 96 in the disclosed example. The controller 88 uses the information from the FADEC 96 to determine the speed at which the auxiliary compressor 72 should be driven to provide cooled airflow at pressure compatible with current operating conditions in the turbine section 28. Controller 88 also uses information from FADEC 96 to adjust valve 102 to set flow rate of cooling air through auxiliary compressor 72. Combined setting of cooling flow rate from valve 102, boost pressure from auxiliary compressor 72 along with supply pressure and temperature at air tap 64 are used to establish the characteristics for cooling air for turbine components 28. These settings can be varied throughout engine operation using an on-board real-time engine analytical model or engine performance simulation integrated within FADEC 96. In other instances the settings can be established using sensors schematically shown at 104 monitoring operating temperatures of components in turbine 28. The example controller 88 can be a dedicated controller 88 for the ICCA system 62 or alternatively may be part of an overall engine or aircraft controller.

The electric motor 82 is provided power from a power source schematically shown at 90. In the disclosed example, power from the power source 90 is schematically shown as being routed through the controller 88. However, power may be provided to the electric motor 82 by other means while command signals from the controller 88 continue to be provided to control operation of the electric motor 82 and thereby operation of the auxiliary compressor 72.

In one disclosed embodiment, the power source is a battery or other external power source utilized to drive the electric motor 82 separate from any mechanical linkage that may constrain the speed at which the auxiliary compressor 72 can be driven.

The example motor 82 enables the auxiliary compressor 72 to operate at a speed that is lower or higher than shaft speeds of the low or high spools 30, 32 of engine 20. Accordingly the auxiliary compressor 72 can operate at higher or lower speeds than that of either the high or low spools 32, 30. Example motor 82 also allows the auxiliary compressor 72 to accelerate and decelerate at rates independent of the acceleration and deceleration behavior of high or low spools 32, 30. Decoupling of the auxiliary compressor 72 from the spools 30, 32 enables the auxiliary compressor 72 to operate at speeds that provide pressures of the airflow that are tailored to a specific flight profile and/or engine operating condition. Independent control of cooling airflow rates are established through control of valve 102. The auxiliary compressor 72 can therefore be operated at speeds tailored to specific operational parameters of the engine 20 including fuel flow, temperature, specific flight profile, engine performance degradation over time or any other engine operating parameter that could be utilized to determine the proper pressure, temperatures and flow rate of the cooled cooling air needed to maintain turbine section components within defined operational temperature ranges. In cases where the aircraft flight profile is largely known (for example, pre-programmed manned or unmanned vehicles) including parameters such as rate of climb and altitude of desired start of cruise flight, coolant to turbine 28 may be controlled to allow cooling to lag or lead actual engine operation to account for thermal response characteristics of specific turbine components.

In the disclosed ICAA system 62, the first heat exchanger 70 and the second heat exchanger 80 are air-to-air heat exchangers that are exposed to bypass flow B. The bypass flow B accepts heat from the core airflow leading to the auxiliary compressor 72 to provide an initial cooling to reduce coolant temperature relative to the temperature extracted at tap 64. The second heat exchanger 80 may also be exposed to bypass flow B and cools the air to a final coolant delivery temperature before being communicated to the turbine section 28. The disclosed heat exchangers 70, 80 may be of any configuration determined to accept heat from the core flow to provide an out flow with a temperature within a desired range. Moreover, although air-to-air heat exchangers are disclosed by way of example, other cooling mediums such as fuel, oil or any other cooling medium could be utilized to cool the cooling air and are within the contemplation and scope of this disclosure.

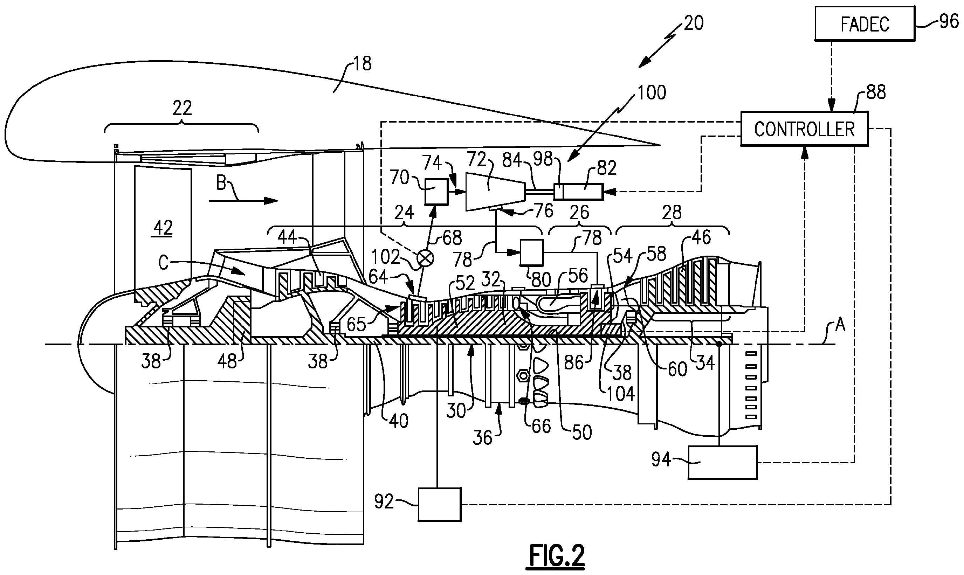

Referring to Figure 2, a cooled cooling air system 100 according to the present invention is schematically illustrated and includes the electric motor 82 that drives a gear box (or 'gear system') 98 that in turns drives the drive shaft 84 to drive the auxiliary compressor 72. The gear box 98 provides a means for the electric motor 82 to drive the auxiliary compressor 72. The gear box 98 enables the use of different size electric motors 82. Additionally, the gear box 98 combined with a desired size of electric motor 82 can enable desired higher and lower speeds of the auxiliary compressor 72 relative to the rotational output speed of motor 82. The disclosed gear box 98 may also be utilized with the system 62 disclosed and described with regard to Figure 1. Moreover, the features in Figure 1 may also be utilized within the system 100.

Moreover, the system 100 includes the controller 88 that controls electric energy for the electric motor 82 from one of a first generator 92 or a second generator 94. The first generator 92 and the second generator 94 are shown schematically and are directly driven from one of the high spool 32 or the low spool 30. In one disclosed embodiment both generators 92, 94 may be included as part of the engine 20 and provide electric energy either concurrently or individually based on operational requirements. Alternatively, only one of the first generator 92 and the second generator 94 may be included provide power to the electric motor 82.

In the disclosed configuration, the first generator 92 is driven by a mechanical linkage to the high spool 32 and the second generator is driven by a mechanical linkage to the low spool 30. The generators 92, 94 are mechanically linked to the one of the low spool 30 and high spool 32 and are thereby constrained by the speed of the corresponding spool 30, 32. However, the electric motor 82 is not constrained by the speed of the spools 30, 32 and operates to drive the auxiliary compressor 72 at speeds tailored to provide cooling airflows at the pressures tailored for engine operating conditions.

Accordingly the disclosed example ICCA systems decouple the auxiliary compressor speed from shaft speeds of the low and high spools enable tailoring of pressurization of cooling air to match engine operating conditions.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20) comprising:
a compressor section (24) including an aft most exit (66);
means (64) for drawing air from the compressor section (24) at a point upstream of the aft most exit (66);
an auxiliary compressor (72) configured to receive air from the means for drawing air and discharge air to a turbine section (28);
an electric motor (82) configured to drive the auxiliary compressor (72);
a first heat exchanger (70) within an inlet passage (68) between the means for drawing air and an inlet (74) to the auxiliary compressor (72); and
a second heat exchanger (80) disposed within an outlet passage (78) between an outlet (76) of the auxiliary compressor (72) and the turbine section (28), **characterised in that**:
the gas turbine engine (20) further comprises a gear system (98) driven by the electric motor (82) for driving the auxiliary compressor (72).

2. The gas turbine engine (20) as recited in claim 1, wherein the means for drawing air comprises an air tap (64) configured to draw air from a point upstream of the aft most exit (66).

3. The gas turbine engine (20) as recited in claim 1 or 2, wherein the compressor section (24) includes a low pressure compressor (44) axially forward of a high pressure compressor (52) and the means for drawing air (64) or the air tap (64) is disposed within the high pressure compressor (52).

4. The gas turbine engine (20) as recited in any preceding claim, wherein the turbine section (28) includes a first turbine (54) disposed forward of a second turbine (46) and the outlet passage (78) communicates cooling air to the first turbine (54).

5. The gas turbine engine (20) as recited in claim 4, wherein the first turbine (54) is disposed aft of a combustor (56) and forward of the second turbine (46).

6. The gas turbine engine (20) as recited in any preceding claim, including a power source (90) powering the electric motor (82), and comprising a generator (92, 94) or a battery.

7. The gas turbine engine (20) as recited in claim 4 when dependent on claim 3, including a generator (92) supplying power to the electric motor (82), the generator (92) driven by a shaft (50) coupling the high pressure compressor (52) to the first turbine (54).

8. The gas turbine engine (20) as recited in claim 4 when dependent on claim 3, including a generator (94) supplying power to the electric motor (82), the generator (94) driven by a shaft (40) coupling the low pressure compressor (44) to the second turbine (46).

9. The gas turbine engine (20) as recited in any preceding claim, including a controller (88) commanding operation of the electric motor (82) independent of a speed of the compressor section (24).

10. The gas turbine engine (20) as recited in any preceding claim, wherein the first heat exchanger (70) and/or the second heat exchanger (80) is exposed to bypass flow (B) through a bypass flow passage.

11. A method of cooling a turbine section (28) of a gas turbine engine (20) comprising:
coupling an auxiliary compressor (72) to be driven by an electric motor (82);
drawing air from an air tap (64) upstream of a downstream most exit (66) of a compressor section (24);
cooling air drawn from the air tap (64) with a first heat exchanger (70);
compressing the cooled cooling air from the first heat exchanger (70) with the auxiliary compressor (72);
cooling air discharged from the auxiliary compressor (72) with a second heat exchanger (80); and
routing the cooled discharged air from the second heat exchanger (80) to a location within the turbine section (28) of the gas turbine engine (20),
**characterised in that**:
a gear system (98) is driven by the electric motor (82) for driving the auxiliary compressor (72).

12. The method as recited in claim 11, including commanding operation of the electric motor (82) to drive rotation of the auxiliary compressor (72) separately from a rotational speed of a compressor section (24) of the gas turbine engine (20).

13. The method as recited in claim 11 or 12, including routing bypass airflow to the first heat exchanger (70) and/or the second heat exchanger (80) for cooling air drawn from the air tap (64).

## Patentansprüche

1. Gasturbinentriebwerk (20), umfassend:
einen Verdichterabschnitt (24), der einen hintersten Ausgang (66) beinhaltet;
Mittel (64) zum Ansaugen von Luft aus dem Verdichterabschnitt (24) an einem Punkt stromaufwärts des hintersten Ausgangs (66);
einen Hilfsverdichter (72), der konfiguriert ist, um Luft von den Mitteln zum Ansaugen von Luft zu empfangen und Luft zu einem Turbinenabschnitt (28) abzugeben;
einen Elektromotor (82), der konfiguriert ist, um den Hilfsverdichter (72) anzutreiben;
einen ersten Wärmetauscher (70) innerhalb eines Einlasskanals (68) zwischen den Mitteln zum Ansaugen von Luft und einem Einlass (74) zu dem Hilfsverdichter (72); und
einen zweiten Wärmetauscher (80), der innerhalb eines Auslasskanals (78) zwischen einem Auslass (76) des Hilfsverdichters (72) und dem Turbinenabschnitt (28) angeordnet ist,
**dadurch gekennzeichnet, dass**:
das Gasturbinentriebwerk (20) ferner ein Getriebesystem (98) umfasst, das durch den Elektromotor (82) zum Antreiben des Hilfsverdichters (72) angetrieben wird.

2. Gasturbinentriebwerk (20) nach Anspruch 1, wobei die Mittel zum Ansaugen von Luft einen Lufthahn (64) umfassen, der konfiguriert ist, um Luft von einem Punkt stromaufwärts des hintersten Ausgangs (66) anzusaugen.

3. Gasturbinentriebwerk (20) nach Anspruch 1 oder 2, wobei der Verdichterabschnitt (24) einen Niederdruckverdichter (44) axial vor einem Hochdruckverdichter (52) beinhaltet und die Mittel zum Ansaugen von Luft (64) oder der Lufthahn (64) innerhalb des Hochdruckverdichters (52) angeordnet sind.

4. Gasturbinentriebwerk (20) nach einem der vorhergehenden Ansprüche, wobei der Turbinenabschnitt (28) eine erste Turbine (54) beinhaltet, die vor einer zweiten Turbine (46) angeordnet ist, und der Auslasskanal (78) Kühlluft an die erste Turbine (54) übermittelt.

5. Gasturbinentriebwerk (20) nach Anspruch 4, wobei die erste Turbine (54) hinter einer Brennkammer (56) und vor der zweiten Turbine (46) angeordnet ist.

6. Gasturbinentriebwerk (20) nach einem der vorhergehenden Ansprüche, das eine Leistungsquelle (90) beinhaltet, die den Elektromotor (82) mit Leistung versorgt, und die einen Generator (92, 94) oder eine Batterie umfasst.

7. Gasturbinentriebwerk (20) nach Anspruch 4, wenn von Anspruch 3 abhängig, das einen Generator (92) beinhaltet, der den Elektromotor (82) mit Leistung versorgt, wobei der Generator (92) durch eine Welle (50) angetrieben wird, die den Hochdruckverdichter (52) mit der ersten Turbine (54) koppelt.

8. Gasturbinentriebwerk (20) nach Anspruch 4, wenn von Anspruch 3 abhängig, das einen Generator (94) beinhaltet, der den Elektromotor (82) mit Leistung versorgt, wobei der Generator (94) durch eine Welle (40) angetrieben wird, die den Niederdruckverdichter (44) mit der zweiten Turbine (46) koppelt.

9. Gasturbinentriebwerk (20) nach einem der vorhergehenden Ansprüche, das eine Steuerung (88) beinhaltet, die den Betrieb des Elektromotors (82) unabhängig von einer Drehzahl des Verdichterabschnitts (24) befiehlt.

10. Gasturbinentriebwerk (20) nach einem der vorhergehenden Ansprüche, wobei der erste Wärmetauscher (70) und/oder der zweite Wärmetauscher (80) einer Umgehungsströmung (B) durch einen Umgehungsströmungskanal ausgesetzt ist.

11. Verfahren zum Kühlen eines Turbinenabschnitts (28) eines Gasturbinentriebwerks (20), umfassend:
Koppeln eines durch einen Elektromotor (82) anzutreibenden Hilfsverdichters (72);
Ansaugen von Luft aus einem Lufthahn (64) stromaufwärts eines am weitesten stromabwärts gelegenen Ausgangs (66) eines Verdichterabschnitts (24);
Kühlen von aus dem Lufthahn (64) angesaugter Luft mit einem ersten Wärmetauscher (70);
Verdichten der gekühlten Kühlluft von dem ersten Wärmetauscher (70) mit dem Hilfsverdichter (72);
Kühlen von Luft, die von dem Hilfsverdichter (72) abgegeben wird, mit einem zweiten Wärmetauscher (80); und
Leiten der gekühlten abgegebenen Luft von dem zweiten Wärmetauscher (80) zu einer Stelle innerhalb des Turbinenabschnitts (28) des Gasturbinentriebwerks (20),
**dadurch gekennzeichnet, dass**:
ein Getriebesystem (98) durch den Elektromotor (82) zum Antreiben des Hilfsverdichters (72) angetrieben wird.

12. Verfahren nach Anspruch 11, das Befehlen des Betriebs des Elektromotors (82) beinhaltet, um die Rotation des Hilfsverdichters (72) separat von einer Rotationsgeschwindigkeit eines Verdichterabschnitts (24) des Gasturbinentriebwerks (20) anzutreiben.

13. Verfahren nach Anspruch 11 oder 12, das Leiten eines Umgehungsluftstroms zu dem ersten Wärmetauscher (70) und/oder dem zweiten Wärmetauscher (80) zum Kühlen von Luft, die aus dem Lufthahn (64) angesaugt wird, beinhaltet.

## Revendications

1. Moteur à turbine à gaz (20) comprenant :
une section de compresseur (24) comportant une sortie la plus à l'arrière (66) ;
un moyen (64) pour aspirer de l'air de la section de compresseur (24) en un point en amont de la sortie la plus à l'arrière (66) ;
un compresseur auxiliaire (72) configuré pour recevoir de l'air du moyen pour aspirer de l'air et évacuer de l'air vers une section de turbine (28) ;
un moteur électrique (82) configuré pour entraîner le compresseur auxiliaire (72) ;
un premier échangeur de chaleur (70) à l'intérieur d'un passage d'entrée (68) entre le moyen pour aspirer de l'air et une entrée (74) vers le compresseur auxiliaire (72) ; et
un second échangeur de chaleur (80) disposé à l'intérieur d'un passage de sortie (78) entre une sortie (76) du compresseur auxiliaire (72) et la section de turbine (28),
**caractérisé en ce que** :
le moteur à turbine à gaz (20) comprend en outre un système d'engrenage (98) entraîné par le moteur électrique (82) pour entraîner le compresseur auxiliaire (72).

2. Moteur à turbine à gaz (20) selon la revendication 1, dans lequel le moyen pour aspirer de l'air comprend un robinet d'air (64) configuré pour aspirer de l'air depuis un point en amont de la sortie la plus à l'arrière (66).

3. Moteur à turbine à gaz (20) selon la revendication 1 ou 2, dans lequel la section de compresseur (24) comporte un compresseur basse pression (44) axialement en avant d'un compresseur haute pression (52) et le moyen pour aspirer de l'air (64) ou le robinet d'air (64) est disposé à l'intérieur du compresseur haute pression (52).

4. Moteur à turbine à gaz (20) selon une quelconque revendication précédente, dans lequel la section de turbine (28) comporte une première turbine (54) disposée en avant d'une seconde turbine (46) et le passage de sortie (78) communique de l'air de refroidissement à la première turbine (54).

5. Moteur à turbine à gaz (20) selon la revendication 4, dans lequel la première turbine (54) est disposée à l'arrière d'une chambre de combustion (56) et à l'avant de la seconde turbine (46) .

6. Moteur à turbine à gaz (20) selon une quelconque revendication précédente, comportant une source d'énergie (90) alimentant le moteur électrique (82), et comprenant un générateur (92, 94) ou une batterie.

7. Moteur à turbine à gaz (20) selon la revendication 4 lorsqu'elle dépend de la revendication 3, comportant un générateur (92) fournissant de l'énergie au moteur électrique (82), le générateur (92) étant entraîné par un arbre (50) couplant le compresseur haute pression (52) à la première turbine (54).

8. Moteur à turbine à gaz (20) selon la revendication 4 lorsqu'elle dépend de la revendication 3, comportant un générateur (94) fournissant de l'énergie au moteur électrique (82), le générateur (94) étant entraîné par un arbre (40) couplant le compresseur basse pression (44) à la seconde turbine (46) .

9. Moteur à turbine à gaz (20) selon une quelconque revendication précédente, comportant un dispositif de commande (88) commandant le fonctionnement du moteur électrique (82) indépendamment d'une vitesse de la section de compresseur (24).

10. Moteur à turbine à gaz (20) selon une quelconque revendication précédente, dans lequel le premier échangeur de chaleur (70) et/ou le second échangeur de chaleur (80) sont exposés à un écoulement de dérivation (B) à travers un passage d'écoulement de dérivation.

11. Procédé de refroidissement d'une section de turbine (28) d'un moteur à turbine à gaz (20) comprenant :
le couplage d'un compresseur auxiliaire (72) devant être entraîné par un moteur électrique (82) ;
l'extraction de l'air d'un robinet d'air (64) en amont d'une sortie la plus en aval (66) d'une section de compresseur (24) ;
le refroidissement de l'air prélevé du robinet d'air (64) avec un premier échangeur de chaleur (70) ;
la compression de l'air de refroidissement refroidi du premier échangeur de chaleur (70) avec le compresseur auxiliaire (72) ;
le refroidissement de l'air évacué du compresseur auxiliaire (72) avec un second échangeur de chaleur (80) ; et
l'acheminement de l'air évacué refroidi du second échangeur de chaleur (80) vers un emplacement à l'intérieur de la section de turbine (28) du moteur à turbine à gaz (20),
**caractérisé en ce que** :
un système d'engrenage (98) est entraîné par le moteur électrique (82) pour entraîner le compresseur auxiliaire (72).

12. Procédé selon la revendication 11, comprenant la commande du fonctionnement du moteur électrique (82) pour entraîner la rotation du compresseur auxiliaire (72) séparément d'une vitesse de rotation d'une section de compresseur (24) du moteur à turbine à gaz (20).

13. Procédé selon la revendication 11 ou 12, comportant l'acheminement du flux d'air de dérivation vers le premier échangeur de chaleur (70) et/ou le second échangeur de chaleur (80) pour refroidir de l'air aspiré du robinet d'air (64).
